# EUROPEAN PATENT SPECIFICATION

(11) **EP 2 030 412 B1**
(45) Date of publication and mention of the grant of the patent: **11.08.2010**
(21) Application number: 07729490.8
(22) Date of filing: 24.05.2007
(51) Int. Cl.: H04L 29/08

(54) **DATA SYNCHRONIZATION**
DATENSYNCHRONISATION
SYNCHRONISATION DE DONNÉES

(30) Priority: 24.05.2006 DE 102006024882
(43) Date of publication of application: 04.03.2009
(73) Proprietor: Sagem Orga GmbH, 33106 Paderborn (DE)
(72) Inventor: JOHN, Thomas, 34454 Arolsen (DE)
(74) Representative: Richardt, Markus Albert
(86) International application number: PCT/EP2007/055061
(87) International publication number: WO 2007/135191

(56) References cited:
- EP-A- 1 608 123
- WO-A-02/25403
- WO-A-2006/021841
- US-A1- 2003 097 382
- US-A1- 2005 198 084
- US-B1- 6 957 776
- US-B1- 6 968 209
- JONSSON A ET AL: "SYNCML-GETTING THE MOBILE INTERNET IN SYNC" ERICSSON REVIEW (INCL. ON), ERICSSON, STOCKHOLM, SE, no. 3, 2001, pages 110-115, XP001081067 ISSN: 0014-0171

## Description

### Technical field

The invention relates to a method for synchronizing a first and a second set of data of a mobile telecommunication device, a processing device for mobile telecommunication and a computer program product.

### Background and related art

Phone books play a very important role in mobile telecommunication systems. For mobile phones, the importance of phone books has become even more important, since typically nowadays such phone books do not only comprise phone numbers assigned to a contact name. Phone books nowadays have been widely enhanced and are able to store detailed contact information like addresses, multiple phone numbers and further personal information of a contact, as well as text messages, emails and even multimedia files and pictures. For subscriber identity module cards (SIM cards) the available storage space for storing extensive contact information is rather limited. By the end of 2006, the most common GSM SIM in the US had a storage memory size of 64 kilobyte, which is relatively small compared to requirements for storing of multimedia files.

In order to overcome such problems, a third generation (3G) technology in the context of mobile phone standards has been defined. Thereby, the 3G phone book functionality is already specified since many years. Such kind of 3G phone book functionality can be realized using new generation universal integrated circuit cards (UICC) which are chip cards that can be used in new generation mobile terminals in GSM and UMTS networks. The UICC ensures the integrity and security of all kinds of personal data and typically holds a few hundred kilobytes. However, it is expected that the storage space will become larger with proceeding technology development.

A universal subscriber identity module (USIM) is an application for UMTS mobile telephony running on a UICC smartcard which is inserted in a 3G mobile phone. Thereby, the USIM is able to store user subscriber information, authentication information and it provides large space for text messages, pictures, phone book contacts and many more. Therewith, the phone book on a UICC has been greatly enhanced. Also, handsets already provide in general very powerful phone book applications in order to use phone book data which is stored on the handset.

However, there is a common problem, that the rather powerful phone book stored on a handset is usually not synchronized with a phone book stored on an UICC smartcard. This has multiple disadvantages: one major disadvantage is, that in case a user switches from one handset to another handset, it is a rather difficult time intensive task for a user to transfer data contained in the original handset's phone book to the new phone book comprised in the new handset by means of using the smartcard as a transport medium. This becomes even more difficult, if the old handset and the new handset already comprise a couple of phone numbers and other contact data which need to be used on both handsets, such that a simple copy of the old phone book to the new phone book using a smartcard as a transport medium, which then typically comprises complete overwriting of the new phone book, is not an appropriate solution.

Another difficulty arises, if a user wants to use one common SIM card with multiple mobile phones. In this case, the user is forced to solely use the phone book integrated into the SIM card: in case any phone numbers, text messages or something else is stored in the user's handset, multiple parallel contact data entries coexist in the handset's phone book and in the phone book of the SIM card. In case, the user then uses one common SIM card with multiple mobile phones, this leads to a chaotic situation where at one or the other point the user has to manually synchronize all the data stored on multiple handsets and on his SIM card.

In order to overcome the above mentioned problems, backup solutions provided by GSM service providers have been suggested. For example GB 2381701 A discloses a process to remotely store and subsequently retrieve telephone numbers that are ordinarily stored within a memory area, commonly referred to as a phone book of a mobile phone handset.

US 2006/0212482 A1 discloses systems, methods and device enhancements to automatically insert, exchange and update a caller's contact information into a user's phone book. Thereby, the phone book can reside on either the UICC card, on the mobile device or on the remote server, for example.

US 7146161 discloses an apparatus for backing up the storage data from a subscriber identity module card.

US 20030097382 discloses a method and a system for detecting change to a record in a file stored on an electronic token, whereby any changes to records are registered by a registering element that provides a service feature, backup of the file and/or synchronizes the file with other files stored remotely. One use of said method is to backup phone book records of USIM/SIM cards. WO 2006/021841 relates to a data transfer between a smartcard and a device external to the smartcard.

### Summary of the invention

The present invention provides a method according to claim 1.

In an embodiment of the invention the first set of data comprises a first phone book and the second set of data comprises a second phone book.

By means of the synchronization of the first and the second phone book by means of the communication between the server and the client, it is for example possible to combine the advantages of a portable phone book stored on a SIM card and feature rich phone book functionality on a handset comprising the second phone book. By implementing the server on the first processing device (for example a SIM card) and implementing the client on the second processing device (for example a handset), a highly flexible solution for synchronization of phone book data is obtained: for example the server can be provided on a SIM card by a GSM service provider, whereas the client can be installed manually by the user on any state of the art mobile telecommunication device. A necessary client to perform the synchronization can thereby be downloaded by a user via for example the GSM network or via a cable connection to a user's home computer. This allows the usage of said modified SIM card in multiple mobile telecommunication devices and a synchronization of the phone book data or any kind of personal data comprised in the SIM card is easily performable with phone book data or any other kind of set of data comprised in the mobile telecommunication device.

In accordance with an embodiment of the invention, the communication between the server and the client is performed using a gateway, the gateway being comprised on the first or the second processing device. Using a gateway has the advantage, that for communications on the first processing device and communications on the second processing device different transport protocols can be used. Thereby the gateway has the purpose of translating one protocol into the other, in order to ensure a high compatibility regarding the used transport protocols.

In accordance with an embodiment of the invention, the synchronization is performed using a server application. Thereby, the synchronization is preferably performed using a SyncML or VCard protocol. In case of a SyncML protocol, a SyncML server application has to be used. The use of a SyncML protocol or a VCard protocol does already fit into existing communication infrastructures provided by many handset manufacturers, since handset manufacturers already provide the possibility to synchronize data via the SyncML protocol. However, such a state of the art synchronization is only possible between for example a user's home computer with a special software suite and the handset itself and not between the set of data comprised in the handset and the set of data comprised on the SIM card.

In accordance with an embodiment of the invention, the communication between the client and the server is performed using an internet application layer protocol. For example such kind of internet application layer protocol is a request response protocol like HTTP. Nevertheless, any other application layer protocol like FTP, HTTPS, SSH, etc can be used. By for example using HTTP as the application layer protocol, the server on the first processing device can be a web server. The usage of a web server has thereby the advantage, that for example Java applets can be easily implemented in order to perform the synchronization according to the invention. The smart card web server (SCWS) specified by the Open Mobile Alliance (OMA) even intends to enable smart card issuers (e.g. mobile network operators) to offer static or dynamic web pages for multiple purposes.

In accordance with an embodiment of the invention, the communication between the client and the server is performed using a transmission control protocol (TCP) and/or the high speed protocol (HSP) and/or the bearer independent protocol (BIP). However, any kind of transport protocol known in the art can be used for communication between the client and the server. This also comprises protocols specified by ETSI TS 102 223, ETSI TS 102 221and ISO 7816-3/4.

In accordance with an embodiment of the invention, a synchronization of the first and/or the second set of data is performed with a backup computer. Thereby, the synchronization of the first and/or the second set of data with the backup computer is performed using an air interface of the first or second processing device. However, any kind of connection from the first or the second processing device to the backup computer can be used which is known in the art, for example an infrared, Bluetooth, USB, firewire or serial connection. A synchronization with a backup computer has thereby the advantage, that in case for example a mobile phone is lost together with its inserted SIM card, data comprised on the SIM card can be easily reconstructed from the backup computer and used with a new SIM card in a new mobile phone issued to the user. Such a backup computer can thereby be a computer provided with a central backup service by a GSM or UMTS service provider, or a personal home computer of a user.

In accordance with an embodiment of the invention, the synchronization comprises comparing data entries of the first and/or the second set of data and/or the data comprised on the backup computer. Thereby, in order to avoid synchronization conflicts, which means for example that two contacts with the same name but different content exist, a conflict resolution policy has to be defined. For example during a synchronization process, incoming contacts will be compared with old existing contacts and if a name is identical, the content will be replaced. However, in the case of real conflicts which are not easily solvable by the software implementation, a user interaction by means of a query on the display of the mobile telecommunication device may be required.

In accordance with an embodiment of the invention, the method further comprises assigning identifiers to data entries. Further, the method comprises mapping of data entry identifiers of data entries comprised in the first and/or the second set of data and/or the backup computer. Thereby, an identifier mapping table is maintained on the server. By mapping of data entry identifiers of data entries comprised in the first and/or the second set of data and/or the backup computer it is possible to clearly assign respective data entries comprised in the first and/or the second set of data and/or the backup computer to each other. This enables a synchronization, which does not require a comparison of the complete content of data entries comprised for example in different phone books in order to perform a synchronization. With respect to phone books, if for example the spelling of a name is corrected in the first phone book, due to the already established assignment (i.e. mapping) of the respective data entry in the first phone book to a respective data entry in the second phone book, said data entry in the second phone book can be easily updated without the risk that the changed and spelling corrected data entry will appear as a separate data entry in the second phone book.

Mapping of data entry identifiers of data entries comprised for example in multiple phone books further enables to maintain a synchronized first phone book on the first processing device, which is used in parallel with multiple second phone books of second processing devices. For example a user may possess a SIM card (first processing device with first phone book) and a private mobile phone (second processing device with second phone book) and a business mobile phone (third processing device with third phone book). Thereby, the same contact may appear in the second phone book assigned to a different (personal) name compared to a respective phone book entry in the third business phone book, where it may appear under a company's name. Nevertheless, since the personal contact information of the second phone book and the business contact information of the third phone book are assigned with different identifiers to one and the same contact information comprised one the first phone book, updating of any of the phone book information with respect to said contact on the first, second or third phone book will also allow a correct synchronization of the other respective phone book contact entries.

In accordance with an embodiment of the invention, changes of data entries are logged in a change log file. Thereby, a separate change log file is maintained for the first and/or the second phone book and/or the phone book comprised on the backup computer. This has the advantage, that in case a synchronization between the phone books has to be performed, not all data entries have to be compared in order to perform said synchronization. By just analyzing the respective log files, only changes applied to phone books and thereby logged in respective log files will be used in order to synchronize the first and/or the second phone book and/or the phone book comprised on the backup computer. Logged is thereby any change that is performed on a phone book. This comprises adding, deleting and modification of any kind of phone book information.

In accordance with an embodiment of the invention, synchronization comprises exchanging information comprised in the log files. This has the advantage, that with respect to phone book contents, in case of large phone book contents, which may occur in the presence of multimedia data or hundreds of phone book entries, the amount of data to be transferred from the client to the server or vice versa is drastically reduced. This reduces power dissipation which is an important aspect to be considered in mobile telecommunication systems.

In accordance with an embodiment of the invention, the synchronization comprises the steps of sending information comprised in the client's change log file to the server, synchronizing data comprised in the first set of data based on analysis of the client's change log file and a server's change log file, sending synchronization update information from the server to the client and sending updated mapping information from the client to the server. Thereby, synchronization is always initiated by the client. This kind of 2-way- synchronization has the advantage, that only a minimum of necessary amount of data is transferred between the first and the second processing device from the client to the server and vice versa, which ensures a synchronization at maximum speed without the need of wasting server system resources for unnecessary comparison of unchanged data entries.

Thereby, such a kind of '2-way-synchronization' process is the preferred normal synchronization type between client and server. A so named 'slow synchronization', which compares one by one every dataset comprised in the first and the second set of data, is only necessary if an initial synchronization between the client and the server has to be performed, if for example the client or server looses its change information or if any other kind of unpredicted mismatching between data entries of the client and the server occurs.

In accordance with an embodiment of the invention, the data comprised in the first and the second set of data comprise names and/or telephone numbers and/or addresses and/or email addresses and/or pictures and/or multimedia files and/or short messages (SMS) and/or ring tones and/or mobile phone settings and/or a calendar and/or user data. Therewith, any kind of user data, user settings, such as language of the user interface, display settings, ring tone volume, and any other kind of personalized content in a mobile phone can be synchronized using the method according to the invention.

In case the first and second set of data comprise phonebooks, the data comprised in the phone books is preferably stored in a standard sized phone book structure which is for example described in general in the 3GPP TS 31.102. Using a standard file system for phone book data, especially on the first processing system, the phone book of the first processing system is backward compatible. This means, even if the first processing system is used together with a second processing system which does not support the implementation of a client, phone book data entries of the first phone book can still be used and read by the second processing system.

It should be mentioned, that even if the first processing system is used together with a second processing system which does not support the implementation of a client, the server functionality on the first processing system is still fully functional, which means, that any kind of modification to the first set of data comprised in the first processing system is still logged in the server's change log file. In case any changes occur to the set of data data comprised in the first set of data, the log file of the first processing system can later be used for a 2-way-synchronization with a different second processing system which itself supports the implementation of a client for the purpose of set of data synchronization.

In accordance with an embodiment of the invention, the first processing device is adapted as a chip card and the second processing device is adapted as a mobile telecommunication device or vice versa, the first processing device is adapted as a mobile telecommunication device and the second processing device is adapted as a chip card. Thereby, the chip card is adapted as a subscriber identity module (SIM) or universal integrated circuit card (UICC). The mobile communication device can be adapted as mobile phone or a personal digital assistant (PDA). Preferably, the first processing device with the implemented server is thereby adapted as the chip card. This ensures a synchronization possibility with almost all new kinds of mobile communication devices which support a SyncML interface for data synchronization with an external entity. Therewith, by implementing the server on the chip card, the chip card is preferable adapted as a secure personal data storage device.

In another aspect, the invention relates to a first processing device according to claim 12. Thereby, the communication between the server and the client is performed using a gateway, wherein the gateway is comprised on the first processing device or on the second processing device. However, the gateway is only necessary, if the first processing device and the second processing device do not use a common transport protocol for data transfer.

In accordance with an embodiment of the invention, the server or the client is further adapted for communication with a backup computer, wherein synchronization of the first and/or the second set of data is performed with data comprised on the backup computer. A backup computer may thereby be understood as a system which either allows only a simple one by one copy of the data comprised in the first and/or the second set of data or the backup computer may be understood as a system which allows a full synchronization of data comprised on the backup computer with data comprised in the first and/or the second set of data.

In accordance with an embodiment of the invention, the first processing device is adapted as a chip card and a second processing device is adapted as a mobile telecommunication device or the first processing device is adapted as a mobile telecommunication device and a second processing device is adapted as a chip card.

In another aspect the invention relates to a computer program product according to claim 15.

In accordance with an embodiment of the invention, the first processing device is thereby adapted as a chip card and the second processing device is adapted as a mobile telecommunication device or vice versa, the first processing device is adapted as a mobile telecommunication device and the second processing device is adapted as a chip card.

### Brief description of the drawings

In the following preferred embodiments of the invention are described in greater detail by way of example only making reference to the drawings in which:
- Fig 1:: is a block diagram illustrating a mobile communication system according to the invention,
- Fig 2:: is a further block diagram illustrating the interrelationship between the server and the client according to an embodiment of the invention,
- Fig 3:: is a mapping table illustrating a mapping of various server-client contacts,
- Fig 4:: illustrates a communication flow embodiment for a slow-synchronization procedure according to the invention,
- Fig 5:: illustrates a communication flow embodiment for a 2-way- synchronization procedure according to the invention.

### Detailed description

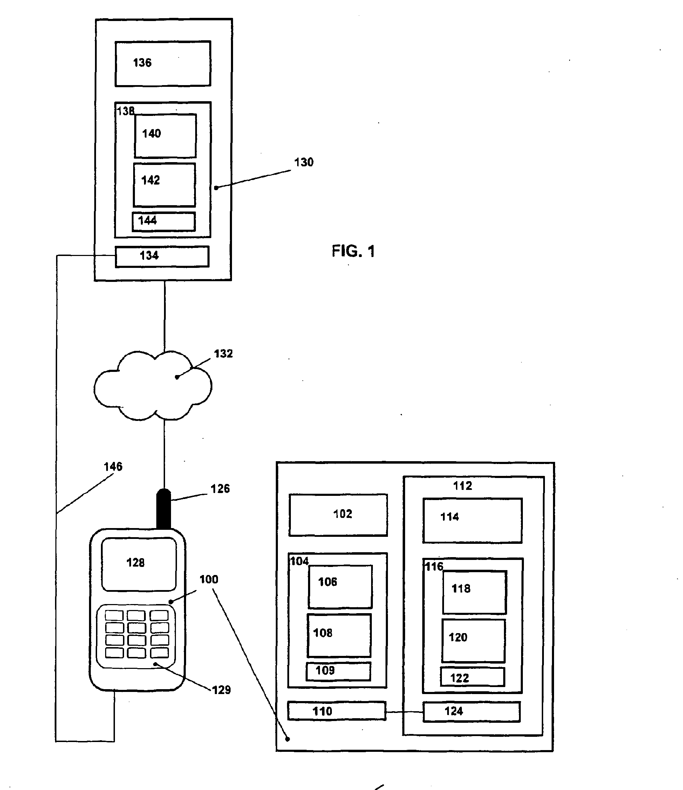

Fig. 1 shows a block diagram illustrating a mobile communication device 100 according to the invention. The mobile communication device 100, for example a mobile phone, comprises a processor 102 and a storage 104, for example a volatile or non-volatile memory. The memory 104 comprises a program module 106 which can be for example a SyncML client application. The storage 104 further comprises user data, such as a phone book 108 comprising phone book entries, wherein such phone book entries may comprise addresses, phone numbers, email addresses, messages, pictures etc.

In order to operate such a mobile telecommunication device 100 in a for example GSM or UMTS network, the mobile telecommunication device 100 further requires a chip card, for example a SIM card 112. Preferably, the SIM card 112 is a new generation UICC card. The SIM card 112 comprises a processor 114 and a memory 116. Thereby, access to the memory 116 is preferably protected with means of an access control by a user authentication. The memory 116 comprises an application 118, for example a web server application. The memory 116 may also comprise further applications for example Java applications which are extending the web server application 118. The memory 116 further comprises a SIM card storing respective user data, such as a phone book 120. In order to allow a synchronization of the phone book 108 of the mobile telecommunication device 100 with the phone book 120 of the SIM card 112, an interface 110 of the mobile telecommunication device and an interface 124 of the SIM card are required. However, in order to reduce the amount of data exchanged for the synchronization of the phone book 108 with the phone book 120, the memory 104 of the mobile telecommunication 100 and the memory 116 of the SIM card 112 comprise respective change log files 109 (mobile communication device) and 122 (SIM card). This means, that in case a synchronization of the phone books 108 and 120 is necessary, only a minimum amount of data is exchanged between the client application 106 with its respective phone book 108 and the server application 118 with its respective phone book 120 in order to perform said synchronization. Any data entries in the phone books 108 and 120, which were not changed since the last synchronization process do not have to be considered for the synchronization and only data entries logged due to a change of said data entries in the respective change log files 109 and 122 are used for the synchronization process.

The mobile telecommunication device 100 further comprises a keyboard or dialing pad 129 and a display 128. For the synchronization, the keypad 129 and the display 128 can be used for example to initiate such a synchronization process by a user. They can also be used in order to prompt a user for a respective input, if in case a synchronization of the phone books 108 and 120 leads to a synchronization conflict.

The mobile telecommunication device 100 further comprises an antenna 126 which can be used with a network 132 for wireless communication purposes. Such a wireless communication can also be used in order to communicate with a computer system 130. Such a computer system 130 may thereby comprise different functionalities. One functionality can be providing of a necessary synchronization client software (to be loaded into the program module 106 as SyncML client application), which can be uploaded from the computer system 130 via the network 132 to the mobile telecommunication 100. This is especially important regarding a possibility of updating client software 106 and server software 118.

Another functionality of the computer system 130 may be the purpose of a backup computer 130. Thereby, the backup computer 130 comprises a processor 136 and a memory 138. The memory 138 comprises a computer program module 140 and a special storage area 142 adapted for storing of backed up phone book data entries of the phone books 108 and/or the phone book 120. If the backup computer 130 is a computer system provided by a wireless telecommunication network provider, the backup system 130 may only comprise a backup functionality in terms of mirroring the content of the phone books 108 and 120. However, in case the backup computer 130 is for example a personal computer of the user of the mobile telecommunication device 100, the user may also wish to use the phone books 108 and/or 120 on the backup computer 130 as a synchronized phone book 142. In case the user then makes any changes to the phone book 142 on the backup computer 130, these changes are tracked by a change log file 144, which then allows also a synchronization of the phone book 142 with the phone books 108 and 120 without the need of exchanging and up/or downloading the complete content of the phone book 124 to the Handset 100.

It should be mentioned, that any other kind of connection 146 between the mobile telecommunication device and the computer system 130 besides a GSM wireless telecommunication connection is also possible. In this case, such a connection 146 between the mobile telecommunication device 100 and the computer system 130 is established by means of the interface 134 comprised in the computer system 130. Such kind of connection 146 may thereby comprise for example a USB, infrared, serial, parallel or any other kind of connection.

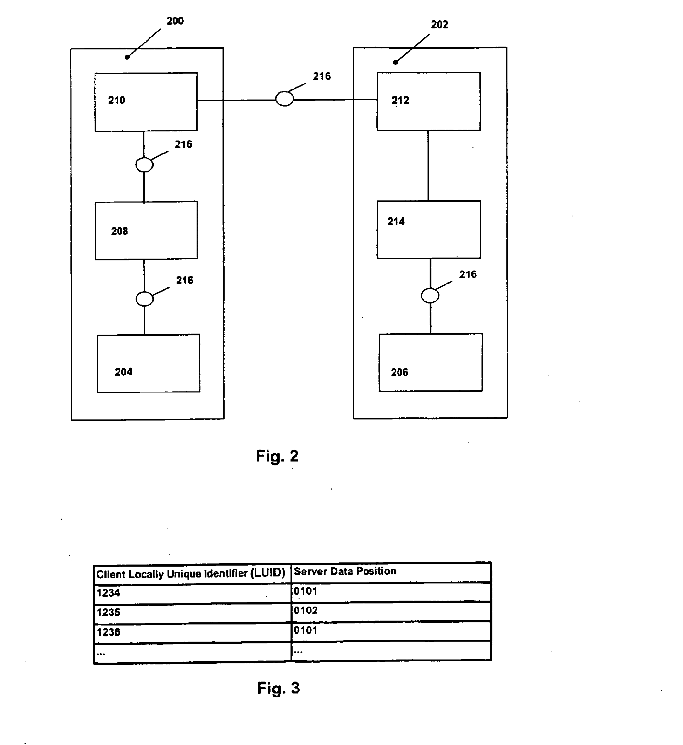

Fig. 2 shows a further block diagram illustrating the inter-relationship between the server and the client according to an embodiment of the invention. In the present example, the handset 200 is adapted as the client and the SIM card 202 is adapted as the server. The SIM card 202 comprises a web server 212 and a SyncML applet 214. By means of an interface 216, the SyncML applet 214 communicates with the SIM card phone book 206.

The handset 200 comprises a SyncML client 208, which itself communicates via an interface 216 with a handset phone book 204. In the present example, the communication with the SyncML client 208 is only possible using the TCP/IP protocol. Therewith, a gateway 210 is necessary, in order to provide an interface between the TCP/IP protocol used for the SyncML client 208 and the web server 212, which typically uses the BIP (bearer independent protocol) as a transport protocol. Therewith, the gateway 210 has the purpose of a layer translation from TCP/IP to BIP.

The SyncML client 208 supports SyncML over HTTP to communicate with the SyncML server adapted as the SyncML applet 214 on top of the smart card web server 212. Thereby, the smart card web server specified by the Open Mobile Alliance (OMA) intends to enable smart card issuers to offer static or dynamic web pages. Contact data will be preferably transferred with the common VCard format.

Also preferably WBXML is used instead of XML for the SyncML protocol to save memory. Thus, further a byte code passer for WBXML is necessary to analyze and process the SyncML commands.

Preferably, the smart card web server 212 requires at least a support for a BIP server mode as defined in ETSI SCP TS 102 223. It should also be mentioned, that the SyncML applet 214 can be implemented into the web server 212 in any suitable kind of programming language. This includes Java, Assembler, C and any other kind of computer programming language.

Fig. 3 shows a mapping table illustrating a mapping of various server client contacts. Thereby, the client locally unique identifier (LUID) identifies contacts stored in the handset phone book and the server data position identifies contacts stored in the SIM card phone book.

In general, SyncML is based on the principle that the client and the server may each have their unique identifiers for items in their databases. Thereby, the client ID is known as a locally unique identifier (LUID) and the server is known as a globally unique identifier (GUID). The server must maintain an ID mapping table for all items exchanged between itself and the client. That is, the server must know which client IDs and which server IDs point to the same data item. LUIDs are thereby always assigned by the client device. This means that even if the server adds an item to the client device, the client will assign the LUID for that item. The client will then use the map operation to send the LUID of the new item to the server. Following the map operation, the server will update its mapping table with the client's LUID. This even allows management of multiple clients with one server, which means, that multiple handsets with multiple phone books can be used together with one SIM card, whereby a synchronization of the SIM card with all respective phone books can be maintained. Thereby, as already mentioned above VCard data objects can be used as a data format for contact data. It can use SyncML as a container.

The mapping table of fig. 3 is stored on the SIM card or in general on the entity which comprises the server to perform the synchronization. In the present example of fig. 3, the phone book of the SIM card (the SIM card comprising the web server) comprises three data entries assigned three identifiers 0101, 0102 and 0101. Each server data position which is indicative of the position where the respective contact data is stored on the SIM card phone book, is assigned an LUID, in the present example the server data position 0101 the LUID 1234, the server data position 0102 the LUID 1235 and the server data position 0101 the LUID 1236. Since preferably, the client's locally unique identifier is a unique number for example calculated as a hash value from the serial number of a handset and the content of a contact entry in the handset phone book, the contact entry at a given server data position does not only have be assigned a respective contact entry in a handset phone book, but it can also be additionally assigned to a specific unique handset of a user. -

In the example of fig. 3, the contact information contained at server position 0101 is assigned the LUID 1234 and LUID 1236. This means, that for example the SIM card comprising the mapping information of fig. 3 was used in two different handsets, wherein in the first handset the contact information stored at the server data position 0101 was assigned a LUID 1234 of the respective contact information of the respective phone book of the first handset and that further the contact information contained at the same server data position 0101 was assigned an LUID 1236 in a second handset which means, that the contact information is stored in said second handset in its respective phone book under the unique identifier 1236.

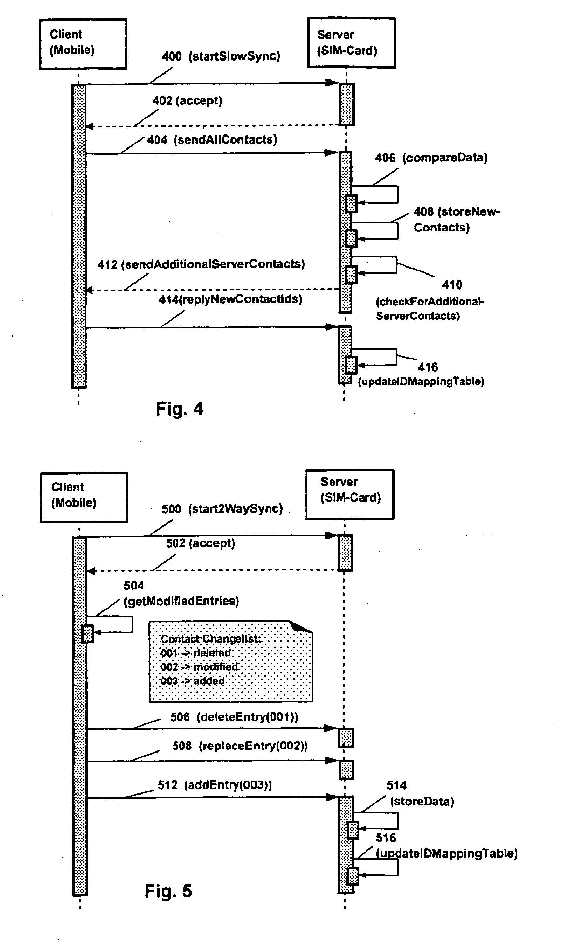

Fig. 4 illustrates a communication flow embodiment for a slow-synchronization procedure according to the invention. Here, the 'slow-sync' is a form of a two way synchronization in which all items in client databases are compared with all items in server databases on a field by field basis. Thereby, the slow synchronization can occur in various cases. One case is, if the client forces the slow-synchronization mode. This can for example occur by a user input. Another case is a very first synchronization of a client and a server, which is necessary if for example a SIM card (server) is inserted in an never synchronized mobile phone (client). Another case which may lead to the necessity of a slow-synchronization is when an error or abort occurs during a previous synchronization phase.

In general, after the synchronization analysis, the server returns all the modification information to the client. Hereby, modification information comprises complete new datasets or also just commands like a change of contact entry parts, deleting of parts of contact entries etc. In tum, the client returns a mapping information for all data items added by the server. An initial slow synchronization is required as a basis for later synchronization types like the 2-way-synchronization, which is far more efficient regarding speed and resource usage.

Referring back to fig. 4 the slow-synchronization communication flow is started by the client in step 400 which sends a respective start command to the server. In return, the server sends an accept message in step 402 to the client. In step 404, the client sends all his contacts to the server. The server itself compares the data comprised in the contacts in step 406, stores respective new contacts which are not yet present on the server's phone book, in step 408. The server further checks for additional server contacts in step 410. This means, that the server checks for contacts which are available on the server's phone book but not yet on the client's phone book. In step 412, the server sends the additional server contacts to the client, which in response returns respective contact IDs or client locally unique identifiers (LUID) in step 414 to the server. In a last step, the server updates its mapping table in step 416 for an assignment of the client's LUIDs to server data positions of the respective entry in the server's phone book.

Fig. 5 illustrates a communication flow embodiment of a 2-way-synchronization procedure according to the invention. Thereby, the 2-way-synchronization is the normal synchronization type in which client and server exchange information about any modification which has occurred to the data contained in respective phone books. The client always initiates this exchange by sending a request to the server. The server processes the synchronization request and new data changes of the client are compared and unified with the data on the server. After that, the server can send its modified data to the client device or vice versa, which is then able to update its database with the data from the server. Once it has updated its database, the client sends back to server all necessary ID mapping information.

Referring to fig. 5, in the communication flow the 2-way-synchronization is started by the client, which sends a command in step 500 regarding a two way synchronization to the server. In response, the server returns an accept message in step 502 to the client. Then, the client reads modified entries in its respective change log file in step 504. The entries in the change log file have thereby been created for every modification of a data entry in the client's phone book. In the present example of fig. 5, the contact with the ID 001 was deleted, the contact with the ID 002 was modified and the contact with the ID 003 was completely new added.

Therefore, in steps 506, 508 and 512 the client sends respective commands or in general information to the server, which then performs respective modification of its phone book entries with respect to the received commands or information received in steps 506, 508 and 512. It should be noted, that either individual commands 506-512 can be sent from the client to the server for the purpose of synchronization or the complete change log file recorded on the client can be sent to the server which itself is then able to analyze said change log file and to perform respective data entry modification of the server's phone book.

In step 514, the server stores the data modified with respect to the modification information obtained in the steps 506-512. In the last step 516, the server updates its mapping table, which in the present example is especially important since the new entry 003 was added to the client and therefore the client's locally unique identifier (LUID) of said entry has to be assigned a respective server data position entry of the server's phone book.

In the embodiment of fig. 5 it is assumed, that no additional modifications were performed on the server's phone book since the last synchronization step. Therefore, the server does not have to send respective synchronization commands back to the client in order to update and synchronize the client's phone book with respect to new or modified entries on the server's phone book. However, if this is necessary, the steps 504-514 have to be performed vice versa on the servers or the client's side, respectively.

As already mentioned, various kinds of application layer protocols can be used to communicate between the client and the server. One application layer protocol is HTTP, another possibility is the usage of CAT_TP as underlying layer for application protocols (TS 102 124 and TS 102 127).

In the case of HTTP, the post command is essential for SyncML. The reason is, that with the post command forms in the user interface can be supported.

It should also be noted, that in general for the client/server phone book synchronization process a configuration mechanism can be provided. Such a configuration mechanism is necessary, since especially the SIM card may only provide a limited amount of storage space for contact data and other information storable on the SIM card. Therewith a configuration mechanism allows multiple parameters to be configured for example during software compile time.

These parameters may comprise for example the maximum number of clients supported for ID mapping. This means, that with one SIM card (server) multiple handheld phones (clients) are supported. Another parameter can be for example the size of the server data position ID. Two other important parameters which need to be configured are the buffer memory size and the maximum message/object size. Thereby, the buffer memory size defines the maximum size of a data unit transferred from the client to the server or vice versa, whereas the maximum message/object size defines the maximum size, an object or message might possess in order to be stored on the client or the server. Since typically, the maximum message/object size is much larger than the buffer memory size, an object or message has to be split up in multiple data units each data unit having maximally the above mentioned buffer memory size, in order to be transferred from the client to the server or vice versa.

### List of Reference Numerals

| | |
|---|---|
| 100 | Mobile telecommunication device |
| 102 | Processor |
| 104 | Memory |
| 106 | Program module |
| 108 | Phone book |
| 109 | Change log file |
| 110 | Interface |
| 112 | SIM Card |
| 114 | Processor |
| 116 | Memory |
| 118 | Program Module |
| 120 | Phone book |
| 122 | Change log file |
| 124 | Interface |
| 126 | Antenna |
| 128 | Display |
| 129 | Keyboard |
| 130 | Backup Computer |
| 132 | Network |
| 134 | Interface |
| 136 | Processor |
| 138 | Memory |
| 140 | Program Module |
| 142 | Phone book |
| 144 | Change log file |
| 146 | Wired connection |
| 200 | Handset |
| 202 | SIM card |
| 204 | Handset phone book |
| 206 | SIM card phone book |
| 208 | SyncML Client |
| 210 | Gateway |
| 212 | Webserver |
| 214 | SyncML Applet |
| 216 | Interface |

## Claims

1. A method for synchronizing a first (120; 206) and a second (108; 204) phone book of a mobile telecommunication device (100), the method comprising:
- providing a first processing device (112; 202), the first processing device (112; 202) comprising the first phone book (120; 206),
- providing a second processing device (100; 200), the second processing device (100; 200) comprising the second phone book (108; 204),
- providing a server (212), the server (212) being comprised on the first processing device (112; 202),
- providing a client (208), the client (208) being comprised in the second processing device (100; 200),
- assigning unique identifiers to data entries comprised in the second phone book (108; 204), wherein said identifiers are unique with respect to the second processing device (100; 200),
- mapping of data entry identifiers of data entries comprised in the first phone book (120; 206) to the respective unique identifiers,
- synchronization of the first (120; 206) and the second (108;204) phone book by means of a communication between the server (212) and the client (208), wherein the first processing device (112; 202) is a chip card and the second processing device (100; 200) is a mobile telecommunication device, wherein an identifier mapping table for mapping of the data entry identifiers and the unique identifiers is maintained on the server (212).

2. The method of claim 1, wherein the communication between the server (212) and the client (208) is performed using a gateway (210), the gateway (210) being comprised on the first or the second processing device (100; 200).

3. The method of claim 1, wherein the synchronization is performed using a server application (214).

4. The method of claim 1, wherein the communication between the client (208) and the server (212) is performed using an internet application layer protocol.

5. The method of claim 1, wherein for communication between the client (208) and the server (212) is performed using the transmission control protocol (TCP) and/or the high speed protocol (HSP) and/or the Bearer independent protocol (BIP).

6. The method of claim 1, further comprising a backup computer (130), wherein synchronization of the first (120; 206) and/or the second (108; 204) phone book is performed with the backup computer (130).

7. The method of claim 6, wherein synchronization of the first (120; 206) and/or the second (108; 204) phone book with the backup computer (130) is performed using an air interface (126) of the first or the second processing device (100; 200).

8. The method of any of the previous claims, wherein the synchronization comprises comparing data entries of the first (120; 206) and/or the second (108; 204) phone book and/or the data (142) comprised on the backup computer (130).

9. The method of any of the previous claims, wherein changes of the data entries are logged in a change log file (109; 122), wherein a separate change log file (109; 122) is maintained for the first (120; 206) and/or the second (108;204) phone book and/or the phone book (142) comprised on the backup computer (130).

10. The method of any of the previous claims, wherein synchronization is initiated by the client (208), and wherein synchronization comprises exchanging information comprised in the log files (109; 122).

11. The method of claim 10, wherein synchronization comprises the steps of:
- sending information comprised in the client's (208) change log file (109) to the server (212),
- synchronizing data comprised in the first phone book (120; 206) based on analysis of the client's change log file (109) and the server's change log file (122),
- sending synchronization update information from the server (212) to the client (208),
- sending updated mapping information from the client (208) to the server (212).

12. A first processing device (112; 202) for mobile telecommunication, the first processing device (112; 202) comprising:
- storage means (116), the storage means (116) being adapted to store a first phone book (120; 206),
- a processor (114), the processor being adapted to execute a server (212), the server (212) being adapted to communicate with a client (208), on a second processing device (100; 200) for performing a synchronization of the first phone book (120; 206) with a second phone book (108;204) comprised on the second processing device (100; 200),
- means for assigning unique identifiers to data entries comprised in the second phone book, wherein said means for assigning identifiers are adapted to assign identifiers which are unique with respect to the second processing device (100; 200),
- an identifier mapping table for mapping of data entry identifiers of data entries comprised in the first phone book (120; 206) to the respective unique identifiers,
wherein the first processing device (112; 202) is a chip card and the second processing device (100; 200) is a mobile telecommunication device.

13. The first processing device (112; 202) of claim 12, wherein the communication between the server (212) and the client (208) is performed using a gateway (210), the gateway (210) being comprised on the first processing device (112; 202) or on the second processing device (100; 200).

14. The first processing device (112; 202) of claim 12, wherein the server (212) or the client (208) is further adapted for communication with a backup computer (130), wherein synchronization of the first (120; 206) and/or the second phone book (108; 204) is performed with data comprised on the backup computer (130).

15. A computer program product (118; 106) comprising computer executable instructions to perform all of the method steps as claimed in any of the claims 1 to 11.

## Patentansprüche

1. Verfahren zum Synchronisieren eines ersten (120; 206) und eines zweiten (108; 204) Telefonbuchs einer Mobiltelekommunikationseinrichtung (100), mit den folgenden Schritten:
- Bereitstellen einer ersten Verarbeitungseinrichtung (112; 202), wobei die erste Verarbeitungseinrichtung (112; 202) das erste Telefonbuch (120; 206) umfasst,
- Bereitstellen einer zweiten Verarbeitungseinrichtung (100; 200), wobei die zweite Verarbeitungseinrichtung (100; 200) das zweite Telefonbuch (108; 204) umfasst,
- Bereitstellen eines Servers (212), wobei der Server (212) auf der ersten Verarbeitungseinrichtung (112; 202) gebildet ist,
- Bereitstellen eines Client (208), wobei der Client (208) in der zweiten Verarbeitungseinrichtung (100; 200) gebildet ist,
- Vergeben von eindeutigen Kennungen an in dem zweiten Telefonbuch (108; 204) gebildeten Dateneinträgen, wobei die Kennungen mit Bezug auf die zweite Verarbeitungseinrichtung (100; 200) eindeutig sind,
- Abbilden von Dateneintragskennungen von in dem ersten Telefonbuch (120; 206) gebildeten Dateneinträgen auf die jeweiligen eindeutigen Kennungen,
- Synchronisation des ersten (120; 206) und des zweiten (108; 204) Telefonbuchs mittels einer Kommunikation zwischen dem Server (212) und dem Client (208), wobei die erste Verarbeitungseinrichtung (112; 202) eine Chipkarte ist und die zweite Verarbeitungseinrichtung (100; 200) eine Mobiltelekommunikationseinrichtung ist, wobei eine Kennungsabbildungstabelle zum Abbilden der Dateneintragskennungen und der eindeutigen Kennungen auf dem Server (212) geführt wird.

2. Verfahren nach Anspruch 1, wobei die Kommunikation zwischen dem Server (212) und dem Client (208) unter Verwendung eines Gateway (210) durchgeführt wird, wobei das Gateway (210) auf der ersten oder der zweiten Verarbeitungseinrichtung (100; 200) gebildet ist.

3. Verfahren nach Anspruch 1, wobei die Synchronisation unter Verwendung einer Serveranwendung (214) durchgeführt wird.

4. Verfahren nach Anspruch 1, wobei die Kommunikation zwischen dem Client (208) und dem Server (212) unter Verwendung eines Internet-Anwendungsschicht-Protokolls durchgeführt wird.

5. Verfahren nach Anspruch 1, wobei die Kommunikation zwischen dem Client (208) und dem Server (212) unter Verwendung des Transmission Control Protocol (TCP) und/oder des High Speed Protocol (HSP) und/oder des Bearer Independent Protocol (BIP) durchgeführt wird.

6. Verfahren nach Anspruch 1, das ferner einen Backup-Computer (130) umfasst, wobei die Synchronisation des ersten (120; 206) und/oder des zweiten (108; 204) Telefonbuchs mit dem Backup-Computer (130) durchgeführt wird.

7. Verfahren nach Anspruch 6, wobei die Synchronisation des ersten (120; 206) und/oder des zweiten (108; 204) Telefonbuchs mit dem Backup-Computer (130) unter Verwendung einer Funkschnittstelle (126) der ersten oder der zweiten Verarbeitungseinrichtung (100; 200) durchgeführt wird.

8. Verfahren nach einem der vorhergehenden Ansprüche, wobei die Synchronisation Folgendes umfasst: Vergleichen von Dateneinträgen des ersten (120; 206) und/oder des zweiten (108; 204) Telefonbuchs und/oder der auf dem Backup-Computer (130) gebildeten Daten (142).

9. Verfahren nach einem der vorhergehenden Ansprüche, wobei Änderungen der Dateneinträge in einer Änderungsprotokollierungsdatei (109; 122) protokolliert werden, wobei für das erste (120; 206) und/oder das zweite (108; 204) Telefonbuch und/oder das auf dem Backup-Computer (130) gebildete Telefonbuch (142) eine separate Änderungsprotokollierungsdatei (109; 122) geführt wird.

10. Verfahren nach einem der vorhergehenden Ansprüche, wobei die Synchronisation durch den Client (208) eingeleitet wird und wobei die Synchronisation den Austausch von in den Protokollierungsdateien (109; 122) gebildeten Informationen umfasst.

11. Verfahren nach Anspruch 10, wobei die Synchronisation die folgenden Schritte umfasst:
- Senden von in der Änderungsprotokollierungsdatei (109) des Client (208) gebildeten Informationen zu dem Server (212),
- Synchronisieren von in dem ersten Telefonbuch (120; 206) gebildeten Daten auf der Basis einer Analyse der Änderungsprotokollierungsdatei (109) des Client und der Anderungsprotokollierungsdatei (122) des Servers,
- Senden von Synchronisations-Aktualisierungsinformationen von dem Server (212) zu dem Client (208),
- Senden von aktualisierten Abbildungsinformationen von dem Client (208) zu dem Server (212).

12. Erste Verarbeitungseinrichtung (112; 202) zur Mobiltelekommunikation, wobei die erste Verarbeitungseinrichtung (112; 202) Folgendes umfasst:
- Speichermittel (116), wobei die Speichermittel (116) dafür ausgelegt sind, ein erstes Telefonbuch (120; 206) zu speichern,
- einen Prozessor (114), wobei der Prozessor dafür ausgelegt ist, einen Server (212) auszuführen, wobei der Server (212) dafür ausgelegt ist, mit einem Client (208) auf einer zweiten Verarbeitungseinrichtung (100; 200) zu kommunizieren, um eine Synchronisation des ersten Telefonbuchs (120; 206) mit einem auf der zweiten Verarbeitungseinrichtung (100; 200) gebildeten zweiten Telefonbuch (108; 204) durchzuführen,
- Mittel zum Vergeben von eindeutigen Kennungen an in dem zweiten Telefonbuch gebildeten Dateneinträge, wobei die Mittel zum Vergeben von Kennungen dafür ausgelegt sind, Kennungen zu vergeben, die mit Bezug auf die zweite Verarbeitungseinrichtung (100; 200) eindeutig sind,
- eine Kennungsabbildungstabelle zum Abbilden von Dateneintragskennungen von in dem ersten Telefonbuch (120; 206) gebildeten Dateneinträgen auf die jeweiligen eindeutigen Kennungen,
wobei die erste Verarbeitungseinrichtung (112; 202) eine Chipkarte ist und die zweite Verarbeitungseinrichtung (100; 200) eine Mobiltelekommunikationseinrichtung ist.

13. Erste Verarbeitungseinrichtung (112; 202) nach Anspruch 12, wobei die Kommunikation zwischen dem Server (212) und dem Client (208) unter Verwendung eines Gateway (210) durchgeführt wird, wobei das Gateway (210) auf der ersten Verarbeitungs-einrichtung (112; 202) oder auf der zweiten Verarbeitungseinrichtung (100; 200) gebildet ist.

14. Erste Verarbeitungseinrichtung (112; 202) nach Anspruch 12, wobei der Server (212) oder der Client (208) ferner für Kommunikation mit einem Backup-Computer (130) ausgelegt ist, wobei die Synchronisation des ersten (120; 206) und/oder des zweiten Telefonbuchs (108; 204) mit auf dem Backup-Computer (130) gebildeten Daten durchgeführt wird.

15. Computerprogrammprodukt (118; 106), das computerausführbare Anweisungen zum Ausführen aller der in beliebigen der Ansprüche 1 bis 11 beanspruchten Verfahrensschritte umfasst.

## Revendications

1. Procédé permettant de synchroniser le premier (120 ; 206) et le second (108 ; 204) répertoire téléphonique d'un dispositif de télécommunication mobile (100), le procédé comprenant :
- la fourniture d'un premier composant de traitement (112 ; 202), le premier composant de traitement (112 ; 202) comprenant le premier répertoire téléphonique (120 ; 206),
- la fourniture d'un second composant de traitement (100 ; 200), le second composant de traitement (100 ; 200) comprenant le second répertoire téléphonique (108 ; 204),
- la fourniture d'un serveur (212), le serveur (212) étant compris sur le premier composant de traitement (112 ; 202),
- la fourniture d'un client (208), le client (208) étant compris dans le second composant de traitement (100 ; 200),
- l'affectation d'identificateurs uniques aux entrées de données comprises dans le second répertoire téléphonique (108 ; 204), dans lequel lesdits identificateurs sont uniques par rapport au second composant de traitement (100 ; 200),
- le mappage d'identificateurs d'entrées de données pour les entrées de données comprises dans le premier répertoire téléphonique (120 ; 206) sur les identificateurs respectifs uniques,
- la synchronisation du premier (120 ; 206) et du second (108 ; 204) répertoire téléphonique au moyen d'une communication entre le serveur (212) et le client (208),
dans lequel le premier composant de traitement (112 ; 202) est une carte à puce et le second composant de traitement (100 ; 200) est un dispositif de télécommunication mobile, dans lequel une table de mappage d'identificateurs destinée à mapper les identificateurs des entrées de données et les identificateurs uniques est maintenue sur le serveur (212).

2. Procédé selon la revendication 1, dans lequel la communication entre le serveur (212) et le client (208) est effectuée en utilisant une passerelle (210), la passerelle (210) étant comprise sur le premier ou sur le second composant de traitement (100 ; 200).

3. Procédé selon la revendication 1, dans lequel la synchronisation est effectuée en utilisant une application (214) du serveur.

4. Procédé selon la revendication 1, dans lequel la communication entre le client (208) et le serveur (212) est effectuée en utilisant un protocole de couche d'application Internet.

5. Procédé selon la revendication 1, dans lequel la communication entre le client (208) et le serveur (212) est effectuée en utilisant le protocole de commande de transmission (TCP) et/ou le protocole à grande vitesse (HSP) et/ou le protocole indépendant du support (BIP).

6. Procédé selon la revendication 1, comprenant en outre un ordinateur de sauvegarde (130) dans lequel la synchronisation du premier (120 ; 206) et/ou du second (108 ; 204) répertoire téléphonique est effectuée grâce à l'ordinateur de sauvegarde (130).

7. Procédé selon la revendication 6, dans lequel la synchronisation du premier (120 ; 206) et/ou du second (108 ; 204) répertoire téléphonique, grâce à l'ordinateur de sauvegarde (130), est effectuée en utilisant une interface hertzienne (126) du premier ou du second composant de traitement (100 ; 200).

8. Procédé selon l'une quelconque des revendications précédentes, dans lequel la synchronisation comprend la comparaison d'entrées de données du premier (120 ; 206) et/ou du second (108 ; 204) répertoire téléphonique et/ou des données (142) comprises sur l'ordinateur de sauvegarde (130).

9. Procédé selon l'une quelconque des revendications précédentes, dans lequel des modifications sur les entrées des données sont consignées dans un fichier de consignation de modifications (109 ; 122), dans lequel un fichier séparé de consignation de modifications (109 ; 122) est maintenu pour le premier (120 ; 206) et/ou le second (108 ; 204) répertoire téléphonique et/ou le répertoire téléphonique (142) compris sur l'ordinateur de sauvegarde (130).

10. Procédé selon l'une quelconque des revendications précédentes, dans lequel la synchronisation est lancée par le client (208), et dans lequel la synchronisation comprend l'échange d'informations comprises dans les fichiers de consignation (109 ; 122)

11. Procédé selon la revendication 10, dans lequel la synchronisation comprend les étapes consistant à :
- envoyer des informations comprises dans le fichier de consignation de modifications (109) du client (208) vers le serveur (212),
- synchroniser des données comprises dans le premier répertoire téléphonique (120 ; 206) sur la base d'une analyse du fichier (109) de consignation de modifications du client et du fichier (122) de consignation de modifications du serveur,
- envoyer des informations de mise à jour de synchronisation depuis le serveur (212) vers le client (208),
envoyeur des informations de mappage mises à jour depuis le client (208) vers le serveur (212).

12. Premier composant de traitement (112 ; 202) destiné à des télécommunications mobiles, le premier composant de traitement (112 ; 202) comprenant :
- un moyen de mémorisation (116), le moyen de mémorisation (116) étant conçu pour mémoriser un premier répertoire téléphonique (120 ; 206),
- un processeur (114), le processeur étant conçu pour exécuter une application serveur (212), le serveur (212) étant conçu pour communiquer avec un client (208) sur un second composant de traitement (100 ; 200) afin d'effectuer une synchronisation du premier répertoire téléphonique (120 ; 206) avec un second répertoire téléphonique (108 ; 204) compris sur le second composant de traitement (100 ; 200),
- un moyen permettant d'affecter des identificateurs uniques à des entrées de données comprises dans le second répertoire téléphonique, dans lequel ledit moyen permettant d'affecter des identificateurs est conçu pour affecter des identificateurs qui sont uniques par rapport au second composant de traitement (100 ; 200),
- une table de mappage d'identificateurs permettant de mapper des identificateurs d'entrées de données concernant les entrées de données comprises dans le premier répertoire téléphonique (120 ; 206) sur les identificateurs uniques respectifs,
dans lequel le premier composant de traitement (112 ; 202) est une carte à puce et le second composant de traitement (100 ; 200) est un dispositif de télécommunication mobile.

13. Premier composant de traitement (112 ; 202) selon la revendication 12, dans lequel la communication entre le serveur (212) et le client (208) est effectuée en utilisant une passerelle (210), la passerelle (210) étant comprise sur le premier composant de traitement (112 ; 202) ou sur le second composant de traitement (100 ; 200).

14. Premier composant de traitement (112 ; 202) selon la revendication 12, dans lequel le serveur (212) ou le client (208) est en outre conçu pour établir une communication avec un ordinateur de sauvegarde (130), dans lequel la synchronisation du premier (120 ; 206) et/ou du second (108 ; 204) répertoire téléphonique est effectuée grâce à des données comprises sur l'ordinateur de sauvegarde (130).

15. Programme informatique (118 ; 106) comprenant des instructions exécutables par un ordinateur permettant d'effectuer la totalité des étapes du procédé conformes à l'une quelconque des revendications 1 à 11.
